# EUROPÄISCHE PATENTSCHRIFT

(11) **EP 0 745 178 B1**
(45) Veröffentlichungstag und Bekanntmachung des Hinweises auf die Patenterteilung: **03.06.1998**
(21) Anmeldenummer: 95911207.9
(22) Anmeldetag: 01.03.1995
(51) Int. Cl.: F01L 1/04, B23P 15/00

(54) **MEHRFACHNOCKEN**
MULTIPLE CAMS
CAMES MULTIPLES

(30) Priorität: 02.03.1994 DE 4406754
(43) Veröffentlichungstag der Anmeldung: 04.12.1996
(73) Patentinhaber: Emitec Gesellschaft für Emissionstechnologie mbH, 53797 Lohmar (DE)
(72) Erfinder: Swars, Helmut, D-51429 Bergisch-Gladbach (DE)
(74) Vertreter: Manderla, Thomas, Dr.
(86) Internationale Anmeldenummer: DE9500292
(87) Internationale Veröffentlichungsnummer: WO9523911

(56) Entgegenhaltungen:
- WO-A-88/00643
- WO-A-93/05323
- DE-A- 2 232 438
- DE-A- 3 439 973
- DE-A- 3 736 453
- DE-A- 4 035 208
- PATENT ABSTRACTS OF JAPAN vol. 008 no. 132 (M-303) ,20.Juni 1984 & JP,A,59 033043 (HISASHI OOKI) 22.Februar 1984,

## Beschreibung

Die Erfindung betrifft Hohlkörper mit mindestens zwei ovalen Hülsen und jeweils einem zwischen zwei Hülsen angeordneten ringförmigen Verbindungssteg, wobei die äußeren Umfangsflächen der Hülsen zumindest im Bereich des kleineren Radius über die Verbindungsstege überstehen und der Überstand im Scheitelpunkt des kleineren Radius größer ist als in den übrigen Bereichen sowie ein Verfahren zur Herstellung eines Hohlkörpers aus einem Rohr, dessen Profil dem der Hülsen entspricht oder das über seine gesamte Länge zu einem der Form der Hülsen entsprechenden Ovalrohr umgeformt wird, und das in bestimmten Abständen abschnittsweise zu einem Ring mit vorgegebenen Innendurchmesser, vorzugsweise über einen Kalibrierdorn, durch Pressen und/oder Hämmern umgeformt wird, wobei jeweils ein ringförmiger Verbindungssteg zwischen den Hülsen gebildet wird.

Ein Beispiel für solche Hohlkörper, anhand dessen die Erfindung beschrieben wird, auf das die Erfindung aber nicht beschränkt ist, sind Anordnungen von mindestens zwei Nocken, sogenannte Nockenpakete oder -gruppen. Bei gefügten Hohlnockenwellen ist es bekannt, zumindest jeweils zwei Nocken zu Gruppen zusammenzufassen, wobei die einzelnen Nocken der Gruppe durch Verbindungshülsen miteinander verbunden sind.

In der EP 0 213 529 werden solche Nockengruppen beschrieben, bei denen die Nocken und die dazwischen angeordneten Verbindungshülsen gleiche Innendurchmesser haben. Beim Auffügen solcher Nockengruppen auf ein Rohr, wobei die unter den Nockengruppen liegenden Rohrabschnitte plastisch, die Rohrgruppen jedoch nur elastisch verformt werden, so daß durch das Rückfedern der Nockengruppen der den Kraftschluß zwischen den beiden Teilen bewirkende Druck erzeugt wird, müssen sehr hohe Drücke angewendet werden.

Um diese hohen Drücke zu vermeiden, werden in der EP 0 309 899 Nockengruppen vorgeschlagen, bei denen die Nocken größere Innendurchmesser als die Verbindungshülsen haben, so daß beim Aufweiten nur die Verbindungshülsen kraftschlüssig erfaßt werden, wodurch besonders dann, wenn diese Verbindungshülsen dünnwandig sind, deutlich herabgesetzte Verformungskräfte erforderlich sind. Derartige bekannte Nockenpakete werden üblicherweise gegossen oder gesintert oder aus einem Vollprofil hergestellt. Die Herstellung solcher Nockengruppen ist sehr aufwendig.

Es sind auch hohle Nockengruppen oder -wellen bekannt, die aus einem Rohr hergestellt werden. Aus der DE 22 32 438 ist eine Nockenwelle bekannt, die aus einem Hohlkörper besteht, der im Bereich der Nocken in einem Gesenk eine Aufweitung erfährt und zwischen den Nocken eine kreiszylindrische Form hat, sowie einem kreiszylindrischen Rohr, auf dem der Hohlkörper fest anliegt. Bei der Herstellung des Hohkörpes fließt das Material des ursprünglichen hohlzylindrischen Querschnitts zwar in die Ausnehmung des Gesenks, wobei jedoch der neben den Nocken vorhandene Werkstoff des Rohrs mit in die Nockenausnehmungen des Gesenks einfließen kann, so daß das fertige hohle Nockenrohr über seine ganze Länge keine nennenswert unterschiedlichen Wandstärken aufweist. Der Hohlkörper weist demnach unterschiedlich große Querschnittsflächen von Nocken und Verbindungsstegen auf.

In der DE-A 34 39 973 ist die Herstellung von Nockenwellen durch Aufweiten eine Rohres im Gesenk beschrieben. Dabei wird ein Rohr mit einem größeren Radius als dem der Verbindungsabschnitte aufgeweitet. Die Nockenprofile werden in jedem Fall in einem Gesenk durch Applikation einer hohen Expansionskraft im Rohrinnern aufgeweitet, wobei insbesondere die Nockenrampen und die Nockenspitzen erzeugt werden.

Aus der DE 37 36 453 Al ist ein Verfahren zur Herstellung von Nockenwellen beschrieben, bei dem im ersten Schritt der Rohling in Nockenform im Bereich der vorgesehenen Lagerstellen durch Hämmern oder Schmieden in eine wenigstens annähernd runde Vorform gebracht wird und in einem anschließenden zweiten Schritt Lagerstellen und übrige Bereiche durch Hämmern und Rundkneten in die Gestalt der Nockenwelle mit Nocken und Lagerstellen eingeformt werden und im dritten Schritt durch einen Twistvorgang die Nocken in die gewünschte Lage gedreht werden. Dabei können wegen des Materialverbundes zwischen Nockenspitzen und Lagerstellen beim Twisten nur die vorher gebildeten Lagerstellen umgeformt werden. Außerdem führt dieser Materialverbund auch zu erheblichem Platzbedarf und Abstand zwischen den Nocken.

Das Problem der vorliegenden Erfindung ist die Schaffung von Nockenpaketen, die wenig aufwendig hergestellt werden können, leichter sind als die bekannten Nockengruppen, die Ausbildung schmaler Nocken und geringster Nockenabstände erlauben und Vorteile in der mechanischen Bearbeitung der Nocken bieten sowie der Vorschlag eines Verfahrens zur Herstellung solcher Nockenpakete.

Dieses Problem wird erfindungsgemäß dadurch gelöst, daß bei einem vorbeschriebenen Hohlkörper das Material zwischen Hülsen und Verbindungssteg zumindest im Bereich der kleineren Radien teilweise abgeschert ist, Hülsen und Verbindungssteg in diesem Bereich ohne Zwischenwand nebeneinander angeordnet sind, und daß die Wandstärke des Verbindungsstegs zumindest teilweise um einen solchen Betrag größer ist als die der Hülsen, daß die Querschnittsfläche von Hülsen und Verbindungssteg dort gleich ist, sowie durch ein vorbeschriebenes Verfahren zur Herstellung eines solchen Hohlkörpers aus einem Rohr, bei dem das Material zwischen Hülse und Verbindungssteg mindestens im Bereich des kleinen Radius teilweise abgeschert und mindestens eine Hülse derart twistend umgeformt wird, daß der Scheitel des kleineren Radius unter zumindest weitgehender Beibehaltung seiner Querschnittsform zu den Scheiteln der benachbarten Hülsen um vorbestimmte Winkelgrade versetzt ist.

Ein solcher Hohlkörper hat gegenüber den bekannten Nockengruppen den Vorteil, daß er aus preiswertem Vormaterial einfach und rationell hergestellt werden kann und leichter ist. Er erlaubt vorteilhaft die Realisierung sehr kleiner Abstände zwischen schmalen Nocken. Wegen der Abscherung des Materials zwischen Hülse und Verbindungssteg im Bereich der kleinsten Radien können vorteilhaft die Scheitelpunkte der kleineren Hülsenradien über den Umfang um vorbestimmte Winkelgrade in einfacher Weise gegeneinander versetzt sein. Wenn der Verbindungssteg in den Bereichen, in denen der Überstand größer ist als die Wandstärke der Hülsen, seitlich in den Hülseninnenraum hineinragt, ist dadurch eine vorteilhafte Abstützung der Hülsen im Bereich der kleineren Radien gegeben.

Während bei herkömmlichen Nocken konkave Laufbahnbereiche durch Schleifen hergestellt werden müssen, können diese erfindungsgemäß, ggf. nach normaler Schleifbearbeitung der Nockenlaufflächen durch Eindrücken der Hülsen unterhalb des Scheitels der kleineren Radien auf sehr einfache Weise hergestellt werden. Wenn ein solcher Hohlkörper mehrere Verbindungsstege aufweist, z. B. auch solche auf den Außenseiten der seitlichen Hülsen, fluchten deren kreisförmige Innenoberflächen miteinander. Die ringförmigen Verbindungsstege können vorteilhaft als Radiallager für solche Hohlkörper ausgebildet werden. Es ist aber auch möglich, daß koaxial zu den Verbindungsstegen weitere Ringelemente vorgesehen sind, deren Innendurchmesser größer ist als der der Verbindungsstege, und daß diese Ringe als Funktionselemente ausgebildet sind, z. B. als Axial- oder Radiallager, Verstellmehrkante, Flanschteile usw.. Derart ausgebildete Hohlkörper können direkt als Nockenwellen eingesetzt werden. Wenn sie für bestimmte Anwendungsfälle keine genügende Festigkeit bzw. Steifigkeit aufweisen, kann vorteilhaft in ihrem Innenraum ein Stützrohr angeordnet werden. Besonders vorteilhaft ist es, wenn solche Hohlkörper auf einem Rohr kraftschlüssig aufgefügt werden, beispielsweise durch hydraulisches Aufweiten des Rohres. Solche als Nockenpakete einsetzbare Hohlkörper haben den Vorteil, sehr preisgünstig und mit hoher Präzision hergestellt werden zu können, ohne daß sie nach dem Umformen einer Nachbearbeitung der Bohrungen und der Außenkontur bedürfen. Besonders vorteilhaft ist die Umformung einer mehrere Meter langen Rohrstange zu einer Vielzahl von solchen Nockenpaketen, wobei nach dem Umformen die Nockenpakete einzeln oder in Gruppen von dieser Rohrstange abgetrennt werden können.

Besonders für das Auffügen solcher Nockenpakete auf Rohren zu Hohlnockenwellen bieten die erfindungsgemäßen Hohlkörper besondere Vorteile. Sie ermöglichen eine vereinfachte Halterung in der Aufweitevorrichtung und bessere Winkeltoleranzen sowie geringere Lagertoleranzen im Vergleich zu konventionell hergestellten Mehrfachnocken. Außendem können solche Nockenpakete vor dem Fügen fertig bearbeitet z. B. geschliffen oder gehärtet werden. Sie bieten vorteilhaft die Möglichkeit relativ schmaler Nockenscheiben, die dicht nebeneinander angeordnet werden können, da durch das Abtrennen im Bereich der kleineren Radien, d. h. der Nockenspitzen keine platzbeanspruchenden Materialübergänge erforderlich sind.

Durch die einstückige Verbindung der durch die Hülsen gebildeten Nocken und der als Fügestellen dienenden Verbindungsstege ist eine Verbesserung des übertragbaren Drehmoments möglich. Da nur die Verbindungselemente beim Fügen aufgeweitet werden, sind die Nockenkonturen durch die Aufweitung nicht beeinflußt und können keine qualitative Beeinträchtigung erfahren.

Die Einschnitte neben den Nockenerhebungen, d. h. im Bereich der kleineren Radien des Ovals beidseitig der Nockenbreite, können vorteilhaft duch Abscheren des Materials beim twistenden Umformen dargestellt werden. Die erfindungsgemäßen Hohlkörper können vorteilhaft durch Kaltumformung sowohl für das Zurückstauchen der Verbindungsstege als auch für das twistende Umformen der Nockenspitzen hergestellt werden, wobei als Umformverfahren beispielsweise Pressen, Hämmern oder eine Kombination beider Verfahren möglich ist. Vorteilhaft wird beim twistenden Umformen und Rückstauchen über einem Kalibrierdorn im Zentrum des Hohlkörpers gearbeitet, wodurch die erforderlichen Aufweittoleranzen in günstiger Weise geschaffen und eingehalten werden können.

Das Härten der Nocken-Laufflächen, beispielsweise durch Elektronenstrahl- oder Laserverfahren, ist vor dem Auffügen, d. h. vor dem Aufweiten, aber auch danach möglich, da die Aufweitbereiche deutlich von den zu härtenden Nockenlaufflächen getrennt sind. Bei vorherigem Härten wird auf diese Weise kein Härteverlust durch das Aufweiten verursacht. Die Mehrfachnockenanordnung ermöglicht eine schnellere, weniger aufwendige und präzisere Montage, wobei die Bearbeitbarkeit ganzer Nockenpakete vor dem Auffügen vorteilhafte Maßhaltigkeit, besonders auch in bezug auf die Winkeltoleranzen ermöglicht. Die Vergrößerung der Wandstärke der Verbindungsstege und die Möglichkeit der breitenden Verformung in die Hülseninnenräume hinein ermöglicht eine steifere Konstruktion des Hohlkörpers insgesamt.

Die als Pakete hergestellten Mehrfachnocken bieten günstige Voraussetzungen, um für eine variable Ventilsteuerung angewendet zu werden. Die Nockenpakete können als Rohrhülsen auf der Welle drehbar und verschiebbar angeordnet werden.

Nachfolgend soll die Erfindung anhand eines Ausführungsbeispiels näher erläutert werden, das in der Zeichnung dargestellt ist. Hierbei zeigt
- Fig. 1: ein in Nockenform verformtes Rohr in perspektivischer Darstellung;
- Fig. 2: die Perspektiv-Ansicht eines Hohlkörpers, der abwechselnd aus Verbindungsstegen und nockenförmigen Hülsen besteht;
- Fig. 3: mehrere erfindungsgemäße Hohlkörper mit nockenförmigen Hülsen, Verbindungsstegen und Funktionselementen in perspektivischer Darstellung, die einstückig aus einem langen Rohr hergestellt sind;
- Fig. 4: eine andere Ausfürungsform eines erfindungsgemäßen Hohlkörpers in seitlicher Schnittansicht, der auf ein Rohr aufgefügt ist und
- Fig. 5: den Querschnitt eines erfindungsgemäßen Hohlkörpers mit einem durch Eindrücken erzeugten, teilweise konkaven Nockenprofil.

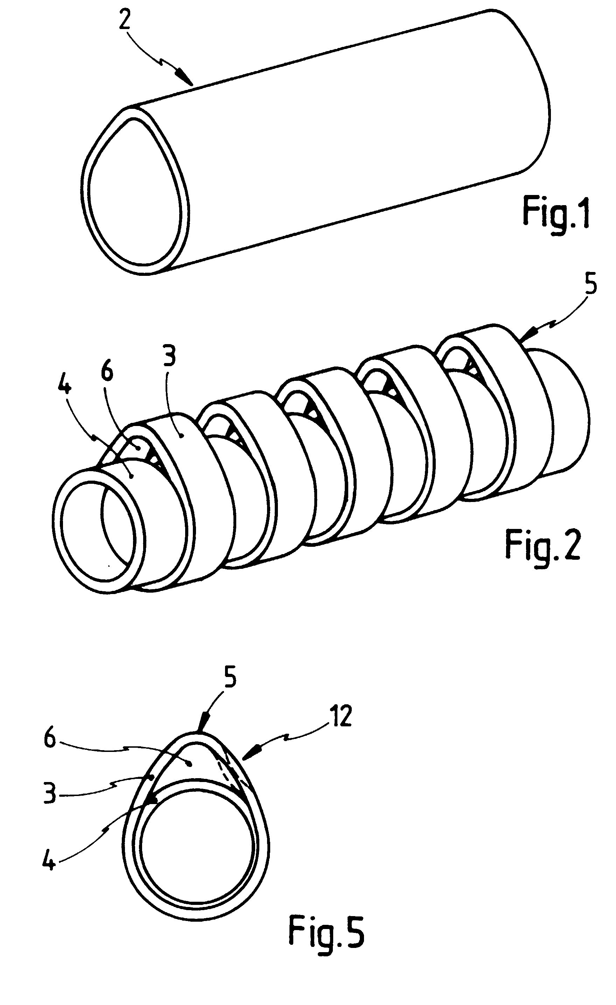

Die in der Zeichnung dargestellten Ausführungsbeispiele des erfindungsgemäßen Hohlkörpers 1 werden aus einem Rohr aus duktilem Material hergestellt, wobei in einem ersten Arbeitsschnitt das Rohr über seine gesamte Länge zu einem nockenförmigen Rohr 2 verformt wird, wie es in Fig. 1 dargestellt ist.

Fig. 2 zeigt einen Hohlkörper, bei dem beidseitig neben den nockenförmigen Hülsen 3 ringförmige Verbindungsstege 4 durch Umformung gebildet sind. Im dargestellten Ausführungsbeispiel ist der radiale Überstand der nockenförmigen Hülse über den ringförmigen Verbindungssteg generell, besonders aber im Bereich des kleineren Radius, d. h. im Bereich der Nockenspitze 5 sehr deutlich ausgebildet.

Die Umformung der Verbindungsstegbereiche aus dem ursprünglich einheitlich nockenförmigen Rohrprofil 2 kann besonders vorteilhaft auf kaltem Wege erfolgen, beispielsweise durch Hämmern, Pressen oder einer Kombination beider Umformverfahren. Da die entsprechenden Rohrabschnitte vorher einen größeren Umfang aufwiesen, ergibt sich bei der Umformung zu dem ringförmigen Verbindungssteg 4 mit kleinerem Umfang wegen der Volumenkonstanz eine entsprechend größere Wandstärke. Im wesentlichen ist diese Wandstärke aber über den Umfang weitgehend gleichmäßig und so bemessen, daß die Querschnittsfläche des ringförmigen Verbindungssteges 4 in etwa gleich der Querschnittsfläche der nockenförmigen Hülse 3 ist.

Wenn wie im dargestellten Ausführungsbeispiel der radiale Überstand der Nockenspitze 5 über den ringförmigen Verbindungssteg 4 größer ist als die Wandstärke der nockenförmigen Hülse 3, ergibt sich ein Überstandshohfraum 6. Das Trennen der Materialien zwischen den Seitenflächen der ringförmigen Verbindungsstege 4 und den nockenförmigen Hülsen 3 kann durch Einschnitte auf der Rohroberfläche vorbereitet, jedoch auch in einfacher Weise durch Abscheren während der Verformung erfolgen, wodurch in Axialrichtung keine Zwischenräume zwischen Verbindungsstegen 4 und Hülsen 3 entstehen. Durch entsprechendes Steuern der Umformung bei der Herstellung der ringförmigen Verbindungsstege kann erreicht werden, daß im Bereich der Überstandshohlräume 6 das Material der Verbindungsstege 4 breitend verformt wird, so daß sich in diesem Bereich die Seitenflächen der Verbindungsstege 4 in den Überstandshohlraum 6 der Hülsen 3 hineinerstrecken. Dadurch kann im Übergangsbereich eine zusätzliche Abstützung des entsprechenden Bereiches der Hülse bewirkt werden.

Im dargestellten Beispiel sind in Fig. 2 auf beiden Seiten vor den seitlichen Hülsen 3 Verbindungsstege 4 vorgesehen. Es ist jedoch auch möglich, daß bei einem solchen Hohlkörper die jeweiligen nockenförmigen Hülsen die äußersten Elemente darstellen.

Durch entsprechende Ausgestaltung des Umformverfahrens, beispielsweise durch seitliches Einschneiden oder Einkerben, kann ein sehr scharfkantiger Übergang zwischen Verbindungsstegen 4 und nockenförmigen Hülsen 3 dargestellt werden. Dies hat den Vorteil, daß solche Anordnungen in Axialrichtung sehr exakt und kompakt ausgebildet werden können, da keine weichen Konturübergänge entstehen. Bei Ausführungsbeispielen mit mehr als einem Verbindungssteg fluchten die Innendurchmesser der Verbindungsstege 3 in Axialrichtung. Dies ist bei mindestens zwei Verbindungsstegen erforderlich, wenn der Hohlkörper durch ein inneliegendes Stützrohr verstärkt oder auf ein innenliegendes Rohr aufgefügt werden soll. Wenn nicht alle Verbindungsstege dieser Forderung entsprechen, müssen die Innendurchmesser der übrigen Verbindungsstege größer sein als die der fluchtenden und dürfen auch nicht teilweise in diese Flucht hineinragen.

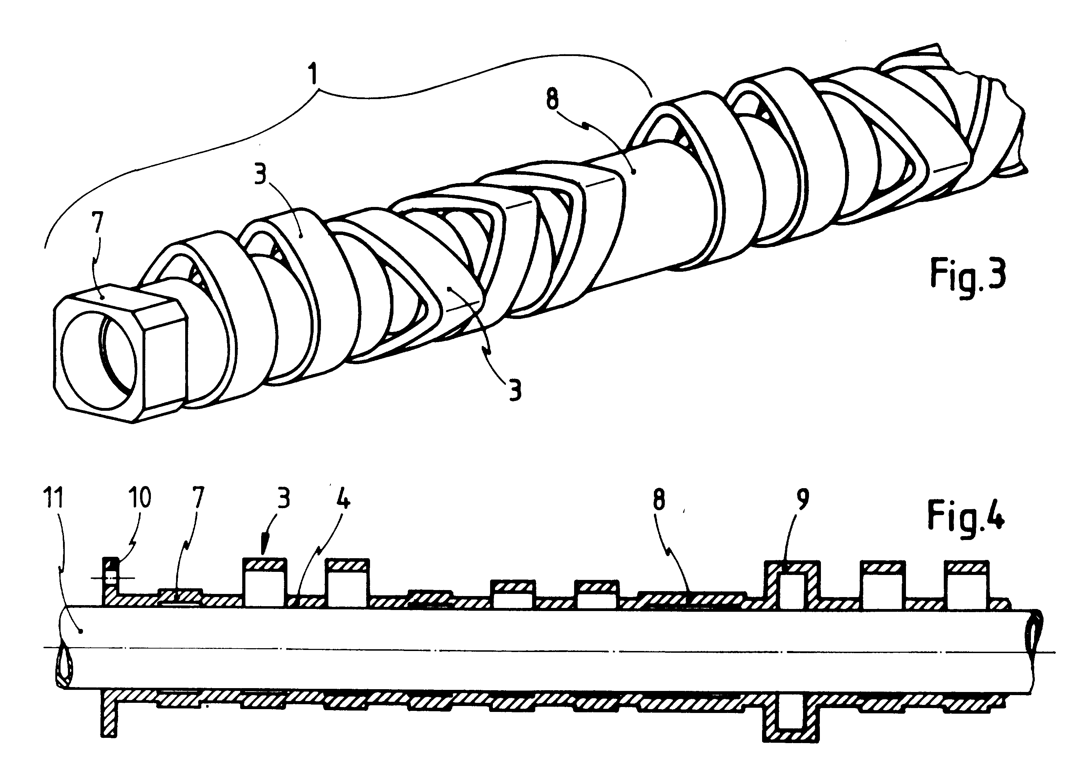

Im Ausführungsbeispiel, das in Fig. 3 dargestellt ist, sind die Nockenspitzen 5 teilweise gegeneinander versetzt. Diese Nockenspitzen waren im ersten Schritt, wie in Fig. 2 gezeigt, alle gleich ausgerichtet. Die Umformung zum Versatz der Nockenspitzen 5 kann ebenfalls durch Kalt-Verformungsverfahren erfolgen und erlaubt eine weitestgehende Beibehaltung der Nocken-Grundform.

Im Ausführungsbeispiel in Fig. 3 sind auch noch andere Funktionselemente vorgesehen. Es ist möglich, einstückig mit dem Hohlkörper 1 auch beispielsweise Verstellvielkante 7, im Ausführungsbeispiel ein Verstellvierkant 7, Radiallager 8, Axiallager 9 und Flanschteile 10 (siehe hierzu Fig. 4) herzustellen.

Wie in der Seitenansicht des Längsschnittes in Fig. 4 erkennbar, können die Radiallager 8 und die Flanschteile 10 an Teilen ausgebildet werden, deren Innendurchmesser mit dem der kleinsten fluchtenden Verbindungsstege gleich sind, d. h. bei einem eingeschobenen Stützrohr oder einem Innenrohr 11, auf das der Hohlkörper zur Bildung einer aufgebauten Hohlwelle aufgefügt ist, form- bzw. kraftschlüssig anliegen. Verstellvielkante 7 und Axiallager 9 liegen mit ihrem Innendurchmesser nicht an dem innenliegenden Rohr an.

Hohlkörper 1 können einzeln oder einstückig mehrfach hintereinanderliegend als Antriebswellen benutzt werden. Solche Hohlkörper können vorteilhaft modulweise aus einem langen Rohr einstückig hergestellt werden und je nach Bedarf von diesem abgetrennt werden. Wenn solche Hohlkörper 1 durch Auffügen auf ein innenliegendes Rohr zur Herstellung gefügter Hohlwellen, beispielsweise Hohlnockenwellen verwendet werden, ist eine besonders gute Maßhaltigkeit der Innendurchmesser der Fügeflächen besonders wichtig. Diese kann vorteilhaft durch Umformung über einem innenliegenden Kalibrierdorn erzielt werden.

Eine ggf. erforderliche Bearbeitung der Hohlkörper, beispielsweise durch Schleifen, Polieren, Härten usw. kann vor dem Auffügen erfolgen, wodurch sich eine Nachbearbeitung nach der Herstellung einer aufgebauten Welle erübrigt. Hierbei hat der erfindungsgemäße Hohlkörper den Vorteil, daß die oberflächenbehandelten oder -bearbeiteten Teile beim Auffügen nicht verformt werden, wodurch sich eine Beeinträchtigung der Bearbeitungsergebnisse vermeiden läßt. Die Bearbeitung kann aber auch nach dem Auffügen erfolgen, wenn dies in besonderen Fällen Vorteile für das Gesamtprodukt ermöglicht.

In Fig. 5 ist der Querschnitt eines Hohlkörpers dargestellt, bei dem ein Abschnitt unterhalb des Scheitels des kleineren Radius durch Eindrücken verformt wurde, der durch die Bezugsziffer 12 bezeichnet ist. Ein Anwendungsbeispiel für eine solche Ausbildung sind z. B. Nockenprofile mit konkaver Lauffläche, wie sie beispielsweise bei der Kipphebelsteuerung von Ventilen erforderlich sein kann. Herkömmlich werden solche konkaven Nockenlaufflächen durch Schleifen hergestellt, was wegen der geometrischen Verhältnisse besonders schwierig und aufwendig ist. Bei den erfindungsgemäßen Hohlkörpern ist dies durch einfaches Eindrücken der entsprechenden Bereiche möglich, weil das duktile Material eine gleichförmige Wandstärke aufweist, die besonders einfache Voraussetzungen für diese spanlose Verformung bietet. Während im dargestellten Beispiel diese Eindrückung 12 nur einseitig vorliegt, kann sie selbstverständlich auch beidseitig des Scheitelpunktes , symmetrisch oder asymmetrisch ausgebildet sein.

Die erfindungsgemäßen Hohlkörper haben gegenüber herkömmlichen Nockenpaketen den Vorteil einer deutlichen Gewichtsersparnis. Durch die einstückige Ausbildung, unterstützt durch die Vergrößerung der Wandstärke der Verbindungsstege 4 im Zuge der Umformung, bieten solche Hohlkörper auch eine hohe Festigkeit und Steifigkeit.

## Patentansprüche

1. Hohlkörper mit mindestens zwei ovalen Hülsen und jeweils einem zwischen zwei Hülsen angeordneten ringförmigen Verbindungssteg, wobei die äußeren Umfangsflächen der Hülsen zumindest im Bereich des kleineren Radius über die Verbindungsstege überstehen und der Überstand im Scheitelpunkt des kleineren Radius größer ist als in den übrigen Bereichen,
**dadurch gekennzeichnet**, daß
das Material zwischen Hülsen (3) und Verbindungssteg (4) zumindest im Bereich der kleineren Radien teilweise abgeschert ist, Hülsen (3) und Verbindungssteg (4) in diesem Bereich ohne Zwischenwand nebeneinander angeordnet sind, und daß die Wandstärke des Verbindungssteges (4) zumindest teilweise um einen solchen Betrag größer ist als die der Hülsen (3), daß die Querschnittsfläche von Hülsen und Verbindungssteg dort gleich ist.

2. Hohlkörper gemäß Anspruch 1, dadurch gekennzeichnet, daß die Scheitelpunkte der kleineren Hülsenradien über den Umfang um vorbestimmte Winkelgrade gegeneinander versetzt sind.

3. Hohlkörper gemäß Anspruch 1 oder 2, dadurch gekennzeichnet, daß der Überstand im Bereich des kleineren Hülsenradius (5) größer ist als die Wandstärke der Hülse (3) und der Verbindungssteg (4) im Bereich der kleineren Hülsenradien seitlich in den Innenraum zumindest einer benachbarten Hülse (3) hineinragt.

4. Hohlkörper gemäß einem der Ansprüche 1 bis 3, dadurch gekennzeichnet, daß mindestens bei einer Hülse (3) auf deren äußerer Seite ein weiterer Verbindungssteg (4) angeordnet ist und die kreisförmigen Innenoberflächen der Verbindungsstege (4) miteinander fluchten.

5. Hohlkörper gemäß einem der Anspruche 1 bis 4, dadurch gekennzeichnet, daß zumindest eine Flanke der Hülsen (3) unterhalb des Scheitels (5) des kleineren Radius derart eingedrückt ist, daß die Eindrückung (12) einen wesentlich größeren Radius aufweist als die benachbarten nicht eingedrückten Bereiche.

6. Hohlkörper gemäß Anspruch 5, dadurch gekennzeichnet, daß die Eindrückung (12) eine zu den benachbarten nicht eingedrückten Bereichen entgegengesetzte Krümmung aufweist.

7. Hohlkörper gemäß einem der vorstehenden Ansprüche, dadurch gekennzeichnet, daß die Verbindungsstege (4) zumindest teilweise als Radiallager ausgebildet sind.

8. Hohlkörper nach einem der vorgenannten Ansprüche, dadurch gekennzeichnet, daß er koaxial zu den Verbindungsstegen (4) Ringelemente aufweist, deren Innendurchmesser größer ist als der der Verbindungsstege (4) und daß diese Ringelemente als Funktionselemente ausbildbar sind.

9. Hohlkörper gemäß einem der vorhergehenden Ansprüche, dadurch gekennzeichnet, daß mindestens einer auf einem Rohr (11) aufgefügt ist, wobei das Rohr (11) durch Innenaufweitung plastisch und die Verbindungsstege (4) elastisch verformt sind und der Hohlkörper (1) mit den Innenflächen seiner Verbindungsstege (4) kraftschlüssig an der Rohraußenfläche anliegt.

10. Verfahren zur Herstellung eines Hohlkörpers aus einem Rohr, dessen Profil dem der Hülsen entspricht oder das über seine gesamte Länge zu einem der Form der Hülsen entsprechenden Ovalrohr umgeformt wird, und das in bestimmten Abständen abschnittsweise zu einem Ring mit vorgegebenem Innendurchmesser, vorzugsweise über einem Kalibrierdorn, durch Pressen und/oder Hämmern umgeformt wird, wobei jeweils ein ringförmiger Verbindungssteg zwischen den Hülsen gebildet wird,
dadurch gekennzeichnet, daß
das Material zwischen Hülse und Verbindungssteg mindestens im Bereich des kleinen Radius teilweise abgeschert und mindestens eine Hülse derart twistend umgeformt wird, daß der Scheitel des kleineren Radius unter zumindest weitgehender Beibehaltung seiner Querschnittsform zu den Scheiteln der benachbarten Hülsen um vorbestimmte Winkelgrade versetzt ist.

11. Verfahren gemäß Anspruch 10, dadurch gekennzeichnet, daß das Material des Verbindungssteges in dem Umfangsbereich, in dem der Überstand größer ist als die Wandstärke der Hülse, breitend in die Bereiche unter den Nockenspitzen umgeformt wird.

12. Verfahren gemäß einem der Ansprüche 10 bis 11, dadurch gekennzeichnet, daß das Umformen des Verbindungssteges und das twistende Umformen der Hülsen in verschiedenen Winkel-Positionen kalt erfolgt.

13. Verfahren nach einem der Ansprüche 10 bis 12, dadurch gekennzeichnet, daß an einem langen Rohr eine Vielzahl von Hohlkörpern einstückig geformt wird und einzelne oder mehrere Hohlkörper durch Abtrennen dargestellt werden.

14. Verwendung mindestens eines Hohlkörpers gemäß einem der Ansprüche 1 bis 8 zur Herstellung einer Nockenwelle, dadurch gekennzeichnet, daß mindestens ein Hohlkörper über ein Rohr geschoben und in an sich bekannter Weise durch Aufweiten des Rohres kraftschlüssig mit diesem verbunden wird, wobei das Rohr plastisch und die Verbindungsstege des Hohlkörpers elastisch verformt werden, so daß der Hohlkörper mit den Innenflächen seiner Verbindungsstege kraft- und formschlüssig an der Rohraußenfläche anliegt.

## Claims

1. A hollow body with at least two oval sleeves and one respective annular connecting web arranged between two sleeves in each case, the outer peripheral faces of the sleeves projecting beyond the connecting webs at least in the region of the smaller radius and the projecting length at the apex of the smaller radius being greater than in the remaining regions, **characterized in that** the material between the sleeves (3) and the connecting web (4) is sheared in part at least in the region of the smaller radii, the sleeves (3) and the connecting web (4) in this region are arranged adjacent to one another without an intermediate wall, and the wall thickness of the connecting web (4) is at least in part greater than that of the sleeves (3) by an amount such that the cross-sectional area of the sleeves and the connecting web is equal at that point.

2. A hollow body according to Claim 1, **characterized in that** the apices of the smaller sleeve radii are offset with respect to one another by pre-determined angular degrees over the periphery.

3. A hollow body according to Claim 1 or 2, **characterized in that** the projecting length in the region of the smaller sleeve radius (5) is greater than the wall thickness of the sleeve (3), and the connecting web (4) in the region of the smaller sleeve radii projects laterally into the interior of at least one adjacent sleeve (3).

4. A hollow body according to one of Claims 1 to 3, **characterized in that** in the case of at least one sleeve (3) a further connecting web (4) is arranged on the outside thereof, and the circular internal surfaces of the connecting webs (4) are in alignment with one another.

5. A hollow body according to one of Claims 1 to 4, **characterized in that** at least one flank of the sleeves (3) is impressed below the apex (5) of the smaller radius in such a way that the impression (12) has a considerably larger radius than the adjacent non-impressed regions.

6. A hollow body according to Claim 5, **characterized in that** the impression (12) has a curvature contrary to the adjacent non-impressed regions.

7. A hollow body according to one of the preceding Claims, **characterized in that** the connecting webs (4) are formed at least in part as radial bearings.

8. A hollow body according to one of the aforesaid Claims, **characterized in that** it comprises annular elements coaxially to the connecting webs (4), the internal diameter of the said annular elements being greater than that of the connecting webs (4), and the said annular elements can be formed as functional elements.

9. A hollow body according to one of the preceding Claims, **characterized in that** at least one is attached to a tube (11), wherein the tube (11) is deformed plastically by internal widening and the connecting webs (4) are deformed resiliently, and the hollow body (1) rests with the inner faces of its connecting webs (4) against the outer face of the tube with non-positive locking.

10. A method of producing a hollow body from a tube, the profile of which corresponds to that of the sleeves or which is shaped over its entire length into an oval tube corresponding to the shape of the sleeves and which is shaped in part at specific intervals into a ring with a pre-determined internal diameter, preferably by way of a calibrating mandrel, by pressing and/or hammering, one respective annular connecting web being formed in each case between the sleeves, characterized in that the material between the sleeve and the connecting web is sheared in part at least in the region of the small radius and at least one sleeve is shaped in a twisting manner in such a way that the apex of the smaller radius is offset with respect to the apices of the adjacent sleeves by pre-determined angular degrees while at least substantially retaining its cross-sectional shape.

11. A method according to Claim 10, **characterized in that** the material of the connecting web in the region of the periphery, in which the projecting length is greater than the wall thickness of the sleeve, is shaped in a widening manner into the regions below the tips of the cams.

12. A method according to one of Claims 10 to 11, **characterized in that** the shaping of the connecting web and the twisting shaping of the sleeves are performed cold in different angular positions.

13. A method according to one of Claims 10 to 12, **characterized in that** a plurality of hollow bodies are shaped in one piece on a long tube, and individual hollow bodies or a plurality of hollow bodies are produced by separation.

14. Use of at least one hollow body according to one of Claims 1 to 8 for producing a camshaft, **characterized in that** at least one hollow body is pushed over a tube and is joined thereto with non-positive locking by widening the tube in a manner known *per se,* wherein the tube is deformed plastically and the connecting webs of the hollow body are deformed resiliently, so that the hollow body rests with the inner faces of its connecting webs against the outer face of the tube with positive and non-positive locking.

## Revendications

1. Corps creux avec au moins deux douilles ovales et respectivement une entretoise annulaire de liaison disposée entre deux douilles, les surfaces périphériques extérieures des douilles faisant saillie au-delà des entretoises de liaison au moins dans la zone du rayon plus faible et la saillie au sommet du rayon plus faible étant plus grande que dans les zones restantes,
caractérisé en ce que le matériau entre douilles (3) et entretoise de liaison (4) est partiellement coupé au moins dans la zone des rayons plus faibles, les douilles (3) et l'entretoise de liaison (4) sont disposées côte à côte dans cette zone sans paroi intermédiaire et que l'épaisseur de paroi de l'entretoise de liaison (4) est au moins partiellement supérieure à celle des douilles (3) d'une quantité telle que la surface en section transversale des douilles et de l'entretoise de liaison y est égale.

2. Corps creux selon la revendication 1,
caractérisé en ce que les sommets des rayons de douille plus faibles sont décalés les uns par rapport aux autres sur la périphérie d'angles prédéterminés.

3. Corps creux selon la revendication 1 ou 2 ,
caractérisé en ce que la saillie, dans la zone du rayon de douille plus faible (5), est supérieure à l'épaisseur de paroi de la douille (3) et l'entretoise de liaison (4), dans la zone des rayons de douille plus faibles, fait saillie latéralement dans le volume intérieur d'au moins une douille (3) adjacente.

4. Corps creux selon l'une des revendications 1 à 3,
caractérisé en ce que, pour au moins une douille (3), une autre entretoise de liaison (4) est disposée sur son côté extérieur et les surfaces intérieures circulaires des entretoises de liaison (4) sont alignées entre elles.

5. Corps creux selon l'une des revendications 1 à 4,
caractérisé en ce qu'au moins un flanc des douilles (3) est enfoncé au-dessous du sommet (5) du rayon plus faible de telle manière que l'enfoncement (12) présente un rayon considérablement plus élevé que les zones adjacentes non enfoncées.

6. Corps creux selon la revendication 5,
caractérisé en ce que l'enfoncement (12) présente une courbure inversée par rapport aux zones adjacentes non enfoncées.

7. Corps creux selon l'une des revendications précédentes,
caractérisé en ce que les entretoises de liaison (4) sont réalisées au moins partiellement sous forme de paliers radiaux.

8. Corps creux selon l'une des revendications précédentes,
caractérisé en ce qu'il présente, coaxialement aux entretoises de liaison (4), des éléments annulaires dont le diamètre intérieur est supérieur à celui des entretoises de liaison (4) et que ces éléments annulaires peuvent être réalisés sous forme d'éléments fonctionnels.

9. Corps creux selon l'une des revendications précédentes,
caractérisé en ce qu'au moins un est adapté sur un tube (11), le tube (11) étant déformé plastiquement par étirage et les entretoises de liaison (4) étant déformées élastiquement, et le corps creux (1) est en appui d'adhérence, par les surfaces intérieures de ses entretoises de liaison (4), sur la surface extérieure du tube.

10. Procédé de fabrication d'un corps creux à partir d'un tube dont le profil correspond à celui des douilles ou qui est déformé sur toute sa longueur sous forme d'un tube ovale correspondant à la forme des douilles et qui est déformé par sections, à des écartements déterminés par estampage et/ou par martelage, à la forme d'un anneau à diamètre intérieur prédéterminé, de préférence par un mandrin de calibrage, une entretoise de liaison annulaire étant formée respectivement entre les douilles,
caractérisé en ce que le matériau entre douille et entretoise de liaison, au moins dans la zone du diamètre faible, est partiellement coupé et au moins une douille est déformée par torsion de telle manière que le sommet du rayon plus faible est décalé d'angles prédéterminés par rapport aux sommets des douilles adjacentes, en conservant au moins largement sa forme en section transversale.

11. Procédé selon la revendication 10,
caractérisé en ce que le matériau de l'entretoise de liaison est déformée, dans la zone périphérique dans laquelle la saillie est supérieure à l'épaisseur de paroi de la douille, en s'élargissant dans les zones sous les pointes de cames.

12. Procédé selon l'une des revendications 10 à 11,
caractérisé en ce que la déformation de l'entretoise de liaison et la déformation par torsion des douilles est réalisée à froid dans diverses positions angulaires.

13. Procédé selon l'une des revendications 10 à 12,
caractérisé en ce qu'une pluralité de corps creux sont formés d'une seule pièce sur un tube long et des corps creux individuels ou plusieurs corps creux sont produits par séparation.

14. Utilisation d'au moins un corps creux selon l'une des revendications 1 à 8 pour la fabrication d'un arbre à cames,
caractérisé en ce qu'au moins un corps creux est glissé sur un tube et est relié à celui-ci, de manière connue en soi, par adhérence par élargissement du tube, le tube étant déformé plastiquement et les entretoises de liaison du corps creux étant déformées élastiquement de telle manière que le corps creux est en appui, par les surfaces intérieures de ses entretoises de liaison, par adhérence et par engagement positif, sur la surface extérieure du tube.
